# EUROPÄISCHE PATENTSCHRIFT

(11) **EP 2 833 181 B1**
(45) Veröffentlichungstag und Bekanntmachung des Hinweises auf die Patenterteilung: **27.07.2016**
(21) Anmeldenummer: 14002112.2
(22) Anmeldetag: 18.06.2014
(51) Int. Cl.: G02B 6/44

(54) **Glasfaser-Verteilungsrahmen mit Patch-Kassetten**
Optical fibre distribution frame with patch cassettes
Cadre de distribution en fibre de verre doté de cassettes Patch

(30) Priorität: 03.08.2013 DE 102013012975
(43) Veröffentlichungstag der Anmeldung: 04.02.2015
(73) Patentinhaber: Langmatz GmbH, 82467 Garmisch-Partenkirchen (DE)
(72) Erfinder: Ertl, Werner, 82490 Farchant (DE); Wankmüller, Andreas, 82481 Mittenwald (DE)
(74) Vertreter: Flosdorff, Jürgen

(56) Entgegenhaltungen:
- EP-A2- 1 111 422
- WO-A1-2009/106874
- JP-A- 2013 113 889
- US-A- 5 402 515

## Beschreibung

Die Erfindung betrifft einen optischen Verteiler, insbesondere einen Glasfaser-Verteilungsrahmen mit mehreren übereinander angeordneten Fächern, die jeweils mehrere Patch-Kassetten für Patchkabel oder Pig Tails aufweisen, wobei jedes Fach eine schubladenartig ausziehbare Schale oder Platte aufweist, in oder auf der die Patch-Kassetten in einem solchen Abstand zueinander befestigt sind, dass sie zu beiden Seiten hin bis in eine Endlage klappbar sind, in der sie in einem Winkel zum Boden der Schale angeordnet sind.

Derartige Glasfaser-Verteilerrahmen sind aus der WP-A1-2009/106874 und der EP-A2-1111422 bekannt.

Optische Verteiler der betrachteten Art enthalten einen Rahmen oder eine ähnliche Aufnahme, in dem Patch-Fächer oder Patch-Paneele übereinander angeordnet sind. Die Höhe eines solchen optischen Verteilerrahmens ist begrenzt, weshalb nur eine bestimmte maximale Anzahl von Patch-Fächern übereinander gestapelt werden können. Dabei besteht ganz allgemein das Bedürfnis nach einer hohen Packungsdichte und einer guten Handhabbarkeit der Patchkabel in dem optischen Verteiler. Der Begriff "Patchkabel" soll durchgehend auch Pig Tails einschließen.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass jedes Fach eine schubladenartig ausziehbare Schale nzw. Platte aufweist, in bzw. auf der die Patch-Kassetten parallel nebeneinander jeweils an einem Randabschnitt so am Boden der Schale bzw. Platte befestigt sind, dass sie um diesen Randabschnitt schwenkbar bzw. klappbar sind. Die Schalen (Platten) haben eine rechteckige, längliche Form und sind senkrecht zu ihrer Längsachse aus ihren Fächern ausziehbar. Die Patch-Kassetten sind quer zur Längsachse der Schalen in einem solchen Abstand zueinander befestigt, dass sie zu beiden Seiten hin bis in eine Endlage klappbar sind, in der sie in einem Winkel zum Boden der Schale angeordnet sind, der bevorzugt zwischen 30 und 45° liegt. Die Kassetten können in ihrer Endlage an einem Anschlag anliegen.

Außerdem sieht die Erfindung vor, dass die Patchkassetten an ihren beiden Seiten Kupplungselemente für optische Stecker der Patchkabel haben. Da die Patch-Kassetten zu beiden Seiten hin schwenkbar angeordnet sind, sind die jeweils benötigten Kupplungen bzw. Adapter für die Steckverbindungen gut zugänglich, indem die benachbarte Kassette bzw. Kassetten einfach weg geklappt werden. Dabei enthält jede Seite der Patch-Kassetten bevorzugt sechs übereinander angeordnete Kupplungselemente bzw. Steckplätze der Patchkabel.

Mit großem Vorteil ist vorgesehen, dass der untere Rand der Patchkassetten die Schwenkachse bildet. Hierzu können die Patchkassetten an ihrem unteren Rand mit Aussparungen versehen sein, die am Boden der Schale befestigte Lagerkörper aufnehmen, an denen die Kassetten befestigt sein können. Die Kassetten sind um die Lagerkörper, die eine runde Scheibenform haben können, schwenkbar. Die Patch-Kassetten können aber auch auf andere Weise schwenkbar in oder auf der Schale bzw. Platte befestigt sein.

Zwischen den einzelnen Patch-Kassetten können auf besonders einfache Weise Steckverbindungen hergestellt werden, indem Patchkabel von einer Kassette durch einen neben dem Kassettenstapel verlaufenden Kanal der Schale zu einer ausgewählten anderen Kassette verlaufen.

In weiterer Ausgestaltung der Erfindung ist vorgesehen, dass an beiden seitlichen Rändern der Kassetten nahe der Schwenkachse, d.h. im unteren Randbereich der Kassetten, ein gemeinsamer Eingang bzw. Ausgang für alle zugehörigen Patchkabel vorgesehen ist. Hierzu ist an dem Eingang/Ausgang ein bogenförmiges Führungselement für die Patchkabel angebracht, das deren Biegeradius beschränkt, und unter dem Führungselement ist die Umfangswand weg gelassen, die die Kassetten in den darüber liegenden Bereichen umschließen kann.

Dadurch, dass der Eingang/Ausgang der Patchkabel zu den Steckverbindungsplätzen, bzw. von diesen nahe bei der Schwenkachse der Kassetten liegt, werden die Patchkabel nur in einem sehr geringen Maße bewegt, wenn Steckverbindungen neu geschaffen oder geändert werden. Damit ist ausgeschlossen, dass die Patchkabel bei ihrer Handhabung im Bereich der Kassetten beschädigt werden.

Weiter wird vorgeschlagen, dass jede Schale über ein Teleskopgestänge mit ihrem Fach verbunden ist, wobei das Teleskopgestänge so ausgebildet ist, dass die Schalen vollständig aus den Fächern heraus gezogen werden können. Jedes Fach hat zweckmäßigerweise einen fest angebrachten Deckel und in den Seitenwänden jeweils einen vom Rand ausgehenden Schlitz, der in eine Eintritts/Austrittsöffnung für die Patchkabel einmündet. Am Rand der Eintritts/Austrittsöffnung kann ein gewölbtes, ebenfalls mit einem Schlitz versehenes, Führungselement für die Glasfaser- bzw. Patchkabel angebracht sein.

An dem vorderen Rand der Schale oder des Bodens des Fachs kann eine schwenkbare Klappe befestigt sein, die bei Arbeiten an den Steckverbindungen frei herab hängen sollte und die nach dem Einschieben der Schale in das zugehörige Fach dessen Vorderseite verschließen kann, indem sie in der aufrechten Lage einrastet.

Bei einer besonders bevorzugten zweiten Ausführungsform der Erfindung sind die Patch-Kassetten jeweils mit einer seitlichen Verlängerung versehen, die eine Aufnahmeeinrichtung für einen überlangen Teil von Patchkabeln oder Pig Tails aufweist. Diese seitliche Verlängerung ist bevorzugt an der Seite der Patch-Kassetten vorgesehen, die in dem zugehörigen Fach innen liegt. Es liegt dabei aber im Rahmen der Erfindung, dass die seitliche Verlängerung an der anderen, außen liegenden Seite der Patch-Kassette ausgebildet sein kann. Es kann auch zweckmäßig sein, dass jede Patch-Kassette an beiden Seiten mit je einer Verlängerung mit einer zugehörigen Aufnahmeeinrichtung für die Überlänge von Patchkabeln versehen ist.

Die seitliche Verlängerung ist zweckmäßigerweise einstückig mit der übrigen Patch-Kassette ausgebildet.

Die Aufnahmeeinrichtung enthält vorteilhafterweise beidseitig einen von der Platte der Patch-Kassette vorstehenden runden, beispielsweise kreisrunden oder ovalen Kranz aus Stegen, um den der überlange Teil der Patchkabel wickelbar ist. Dabei kann in der seitlichen Verlängerung ein rundes, beispielsweise kreisrundes oder ovales Loch ausgebildet sein, das zu beiden Seiten der Patchkassette von abstehenden Stegen umschlossen ist. Die Stege können nach außen abgewinkelte obere Endabschnitte haben, so dass die Patchkabel im aufgewickelten Zustand sicher an der Aufnahmeeinrichtung gehalten sind.

Wenn jede Patch-Kassette mit einer Halterung bzw. einer Wickelaufnahme für evtl. vorhandene Überlängen der anzuschließenden Patchkabel versehen ist, ist deren Handhabung erheblich vereinfacht und verbessert. Außerdem wird erfindungsgemäß vorgeschlagen, dass jede Schale bzw. schubladenartig ausziehbare Platte mit acht schwenkbaren bzw. klappbaren Patch-Kassetten versehen wird. Hierdurch enthält der Verteilungsrahmen ebenso viele Patch-Plätze, wie der zugehörige Verteilungsrahmen für die Spleißablagen.

Die Erfindung sieht somit einen optischen Verteiler mit einem Rahmen mit übereinander angeordneten Patchfächern mit ausziehbaren Schalen und darin klappbaren Patch-Kassetten vor, der eine hohe Packungsdichte hat und eine gute Bedienbarkeit mit schonender Handhabung der Patchkabel ermöglicht.

Weitere Einzelheiten der Erfindung ergeben sich aus der nachfolgenden Beschreibung zweier bevorzugter Ausführungsformen sowie anhand der Zeichnungen.

Dabei zeigen:
- Figur 1: eine Patch-Kassette einer ersten Ausführungsform;
- Figur 2: eine Schale mit sechs Patch-Kassetten der ersten Ausführungsform;
- Figur 3: die Schale der Figur 2 mit einer nach links geklappten Kassette;
- Figur 4: die Schale in dem zugehörigen Fach, ohne Deckel und ohne vordere Klappe;
- Figur 5: die Schale in dem aus dem Fach herausgezogenen Zustand;
- Figur 6: die Anordnung gemäß Figur 5 mit einer umgeklappten Patch-Kassette
- Figuren 7a und 7b: eine Patch-Kassette einer zweiten Ausführungsform, mit und ohne aufgewickelte Patchkabeln;
- Figuren 8a und 8b: eine Schale mit 8 Patch-Kassetten der zweiten Ausführungsform, mit und ohne aufgewickelte Patchkabeln;
- Figur 9: die Schale in dem aus dem Fach herausgezogenen Zustand;
- Figur 10: die Anordnung gemäß Figur 9 mit einer umgeklappten Patch-Kassette;
- Figuren 11 und 12: eine Variante der zweiten Ausführungsform gemäß den Figuren 7a und 7b.

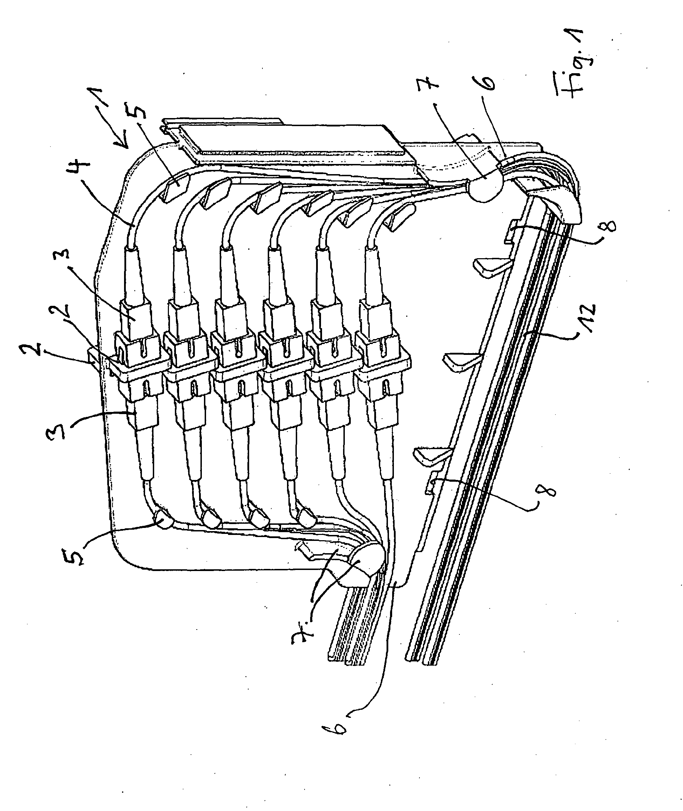

Die in Figur 1 dargestellte Patch-Kassette 1 enthält auf beiden Seiten sechs übereinander angeordnete Kupplungen 2 für optische Stecker 3 von Patchkabeln 4, die über Führungselemente 5 zu beidseitigen Eingängen/Ausgängen 6 geführt sind. Vor den Eingängen/Ausgängen 6 ist jeweils ein weiteres Führungselement 7 angebracht, das den Biegeradius der Patchkabel 4 so begrenzt, dass die Glasfasern hier nicht beschädigt werden können.

Die Patch-Kassetten 1 haben an ihrem unteren Rand Aussparungen 8, in die am Boden 9 einer zugehörigen Schale 10 angebrachte Lagerkörper 11 eintreten. Die Patch-Kassetten 1 sind so an den Lagerkörpern 11 befestigt, dass sie in beiden seitlichen Richtungen klappbar sind, damit entweder die Vorderseite oder die Rückseite einer Patch-Kassette zum Herstellen oder Ändern von Steckverbindungen frei liegt.

Wie Figur 1 zeigt, werden die Patchkabel 4 der rechten Hälfte durch einen Kanal 12 zur innen liegenden Seite der Patch-Kassette 1 geführt.

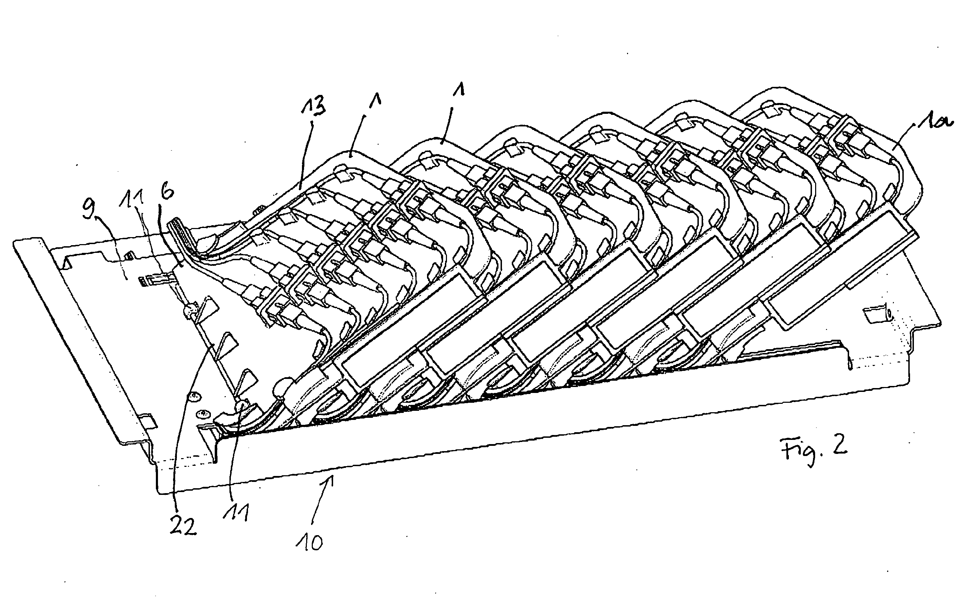

In Figur 2 sind alle sechs Patch-Kassetten 1 in der Darstellung nach rechts geklappt, wobei die an der rechten Seite äußerste Kassette 1a an einem Anschlag anliegt, der den Neigungswinkel begrenzt. Die übrigen Kassetten liegen an der Kassette 1 a bzw. aneinander an. Figur 2 lässt zudem erkennen, dass jede Patch-Kassette 1 eine überstehende Umfangswand 13 enthält, die an den Eingängen/Ausgängen 6 weg gelassen ist.

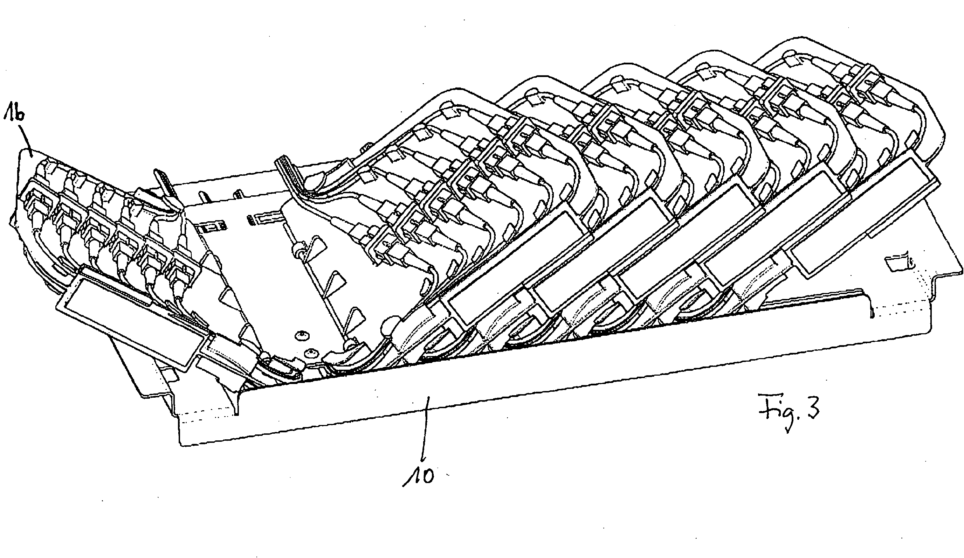

In Figur 3 ist die an der linken Seite äußerste Patch-Kassette 1 b nach links geklappt, so dass sichtbar wird, dass die Rückseite der Patch-Kassetten 1 mit denselben Elementen wie ihre Vorderseite versehen ist. Die Patch-Kassette 1 b liegt an nicht dargestellten Anschlägen an.

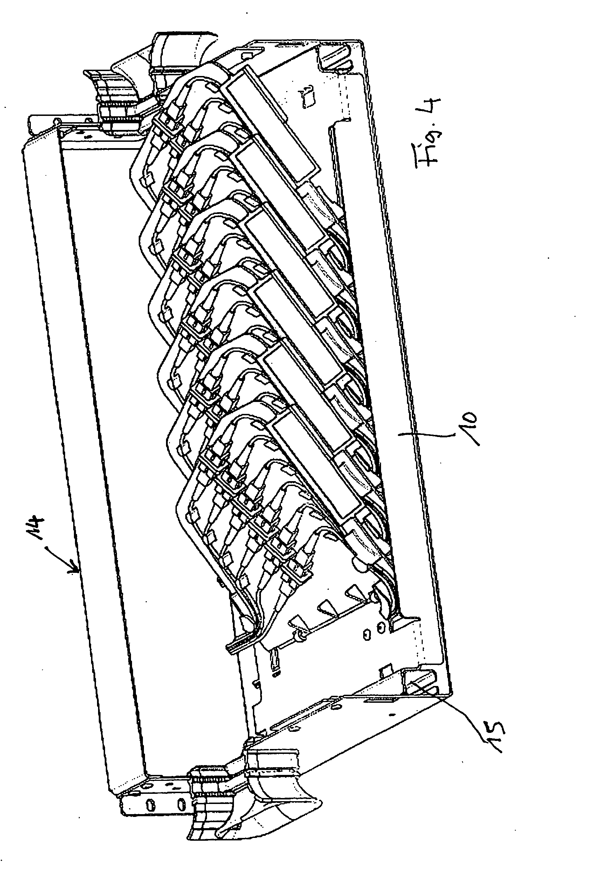

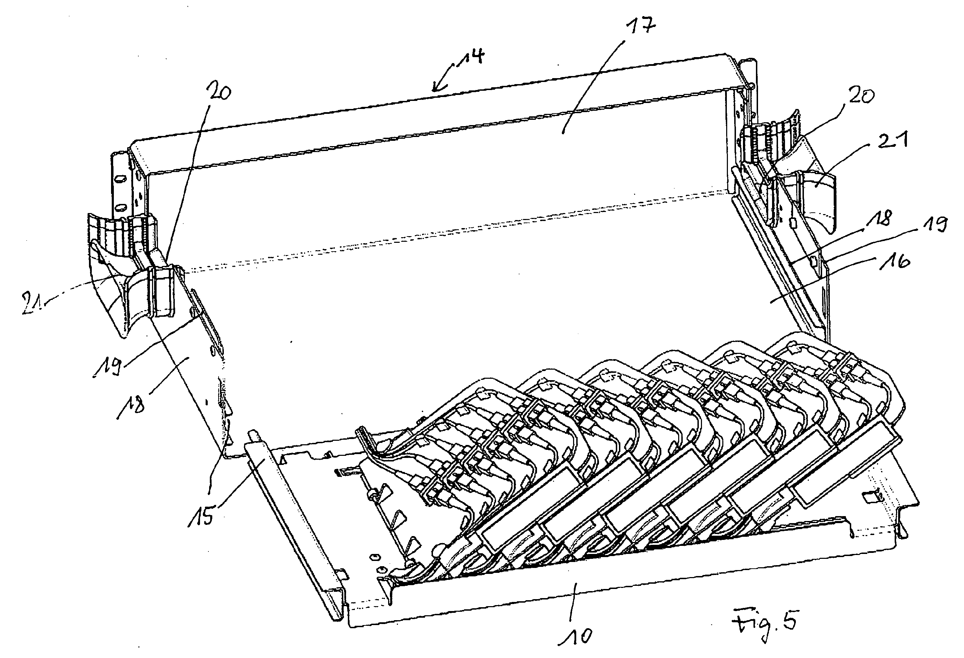

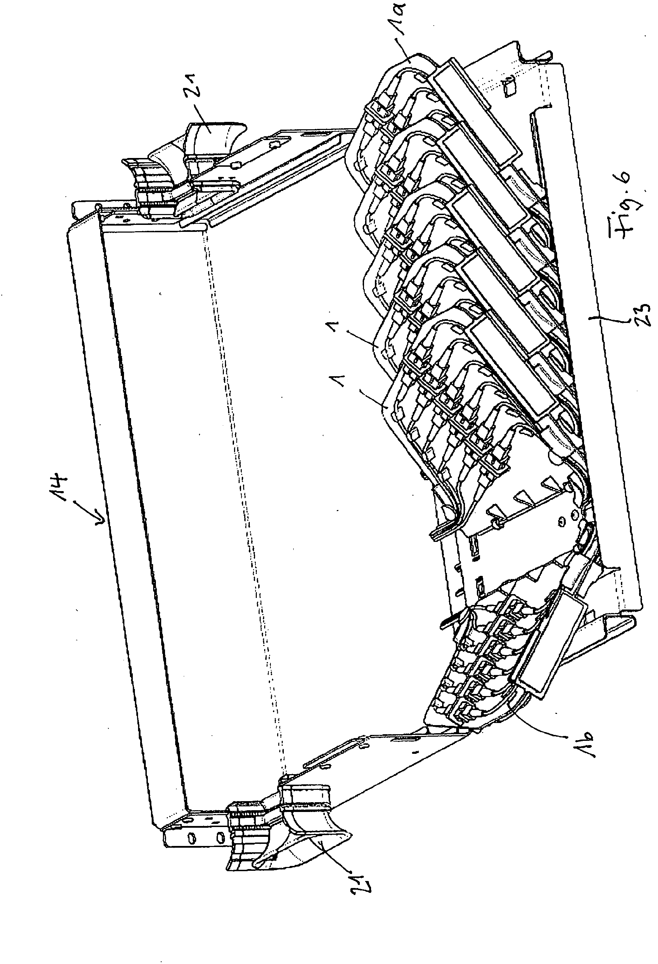

In Figur 4 ist die Schale 10 mit ihren Patch-Kassetten 1 in ein zugehöriges Fach 14 aufgenommen, mit dem die Schale 10 über ein Teleskopgestänge 15 verbunden ist. Wie insbesondere die Figuren 5 und 6 zeigen, enthält jedes Fach 14 eine Bodenwand 16, eine Rückwand 17, Seitenwände 18 und eine obere Wand, die in den Figuren jedoch weg gelassen ist. Es versteht sich, dass in einem optischen Verteilungsrahmen mehrere derartige Fächer 14 übereinander gestapelt angeordnet sind.

Zwischen der nicht dargestellten oberen Wand des Fachs 14 und dem oberen Rand 19 der Seitenwände 18 verbleibt ein Zwischenraum, der sich bis zu seitlichen Eintritt/Austritt-Öffnungen 20 in den Seitenwänden 18 erstreckt. An der Außenseite der Seitenwände 18 sind gewölbte Trichter 21 angebracht, durch die Glasfasern bzw. Patchkabel 4 eingeführt werden oder austreten.

In Figur 5 ist das Teleskopgestänge 15 nur teilweise dargestellt, es ist aber sichtbar, dass die Schale 10 vollständig aus dem Fach 14 herausziehbar ist.

Die Patchkabel 1 werden durch die seitlichen Aussparungen über den Seitenwänden 18 zu den Eintritt-Austrittöffnungen 20 und deren Trichter 21 geführt, bevor die Schale 10 nach Ausführung der Steckverbindungen wieder in das Fach 14 eingeschoben wird.

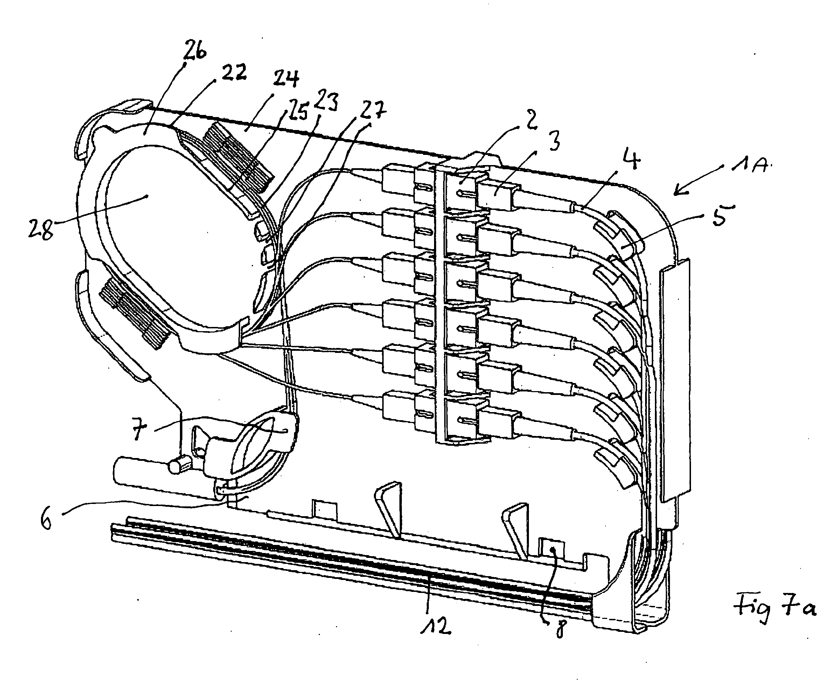

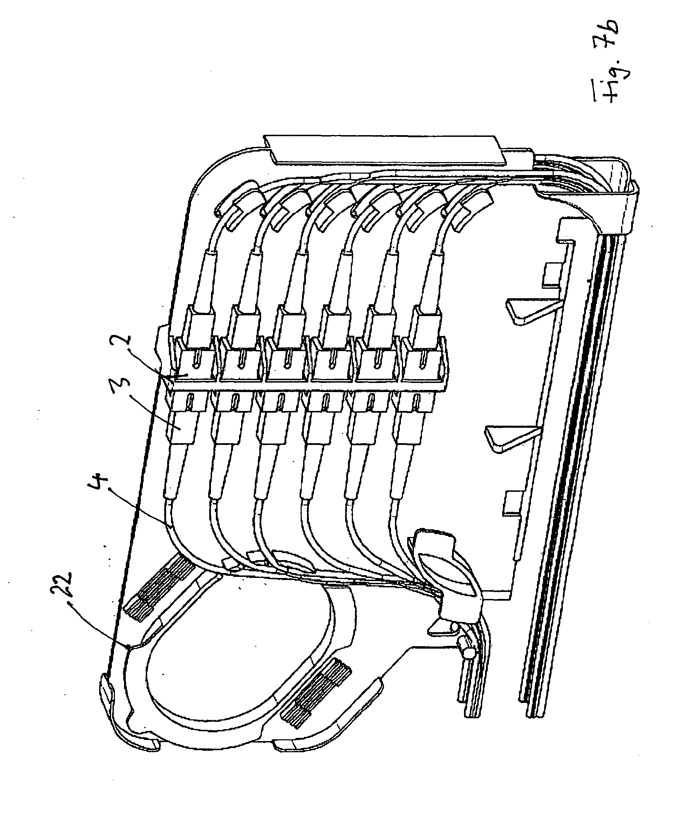

Die Figuren 7 bis 10 zeigen eine zweite Ausführungsform der Erfindung, wobei die Teile, die mit denjenigen der ersten Ausführungsform übereinstimmen, mit denselben Bezugszeichen gekennzeichnet sind.

Die Patch-Kassetten 1A haben jeweils eine Aufnahmeeinrichtung bzw. Aufwickeleinrichtung 22, auf die ein Abschnitt 23 von Patchkabeln 4 aufwickelbar ist, wenn die zugehörigen Patchkabel eine Überlänge haben. Bei der dargestellten Ausführungsform haben die Patch-Kassetten 1A an der Seite, die dem Inneren des zugehörigen Fachs zugewandt ist, eine seitliche Verlängerung 24, die bei der dargestellten Ausführungsform einstückig mit der Patch-Kassette 1A ausgebildet ist. Dabei liegt es im Rahmen der Erfindung, dass die Patch-Kassetten an beiden Seiten oder - in der Darstellung der Figur 7a - nur an der rechten Seite eine Verlängerung mit einer Aufwickeleinrichtung haben können. Die Aufwickeleinrichtung 22 kann auch an einem gesonderten, vorzugsweise plattenförmigen Bauteil ausgebildet sein, das an der Patch-Kassette befestigt, beispielsweise mit dieser verrastet sein kann.

Die Aufwickeleinrichtung 22 enthält auf beiden Seiten der Patch-Kassette 1A einen ovalen Kranz aus senkrecht von der Platte der Patch-Kassette abstehenden Stegen 25, deren oberen Enden nach außen abgewinkelt (Bezugszeichen 26) sind, damit die aufgewickelten Abschnitte 23 der Überlängen der Patchkabel sicher auf der Aufwickelaufrichtung 22 gehalten sind. Die Stege 25 können unterbrochen sein (Bezugszeichen 27) damit Patchkabel auf dem Weg zu ihren Steckplätzen durch den Kranz hindurchgeführt werden können, wie Figur 7b zeigt. Bei dieser Ausführungsform wird von der Aufwickeleinrichtung 22 kein Gebrauch gemacht, da die Patchkabel der linken Seite keine Überlänge haben.

Um Material zu sparen, kann der Innenraum des aus den Stegen 25 gebildeten Kranzes ein Loch bzw. ein ovales Fenster 28 in der Patch-Kassette 1A sein.

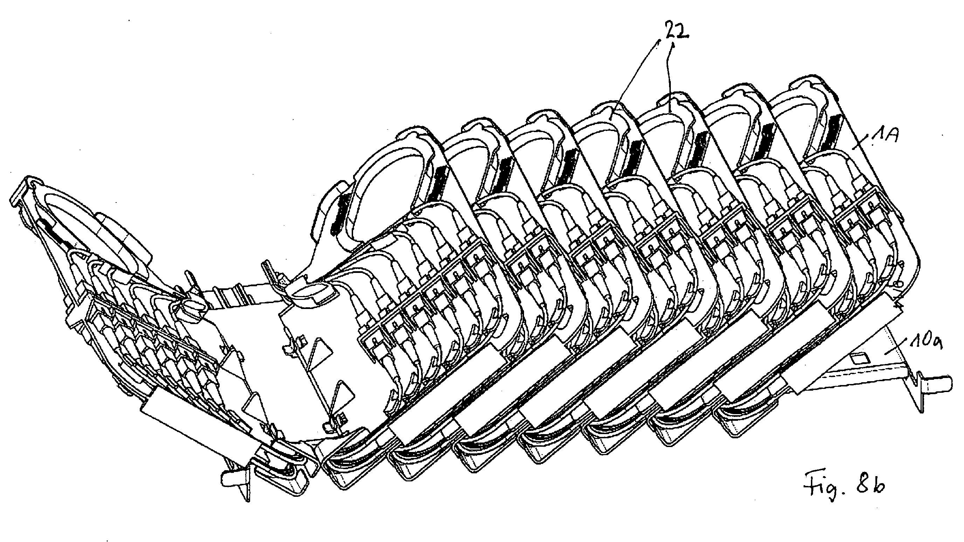

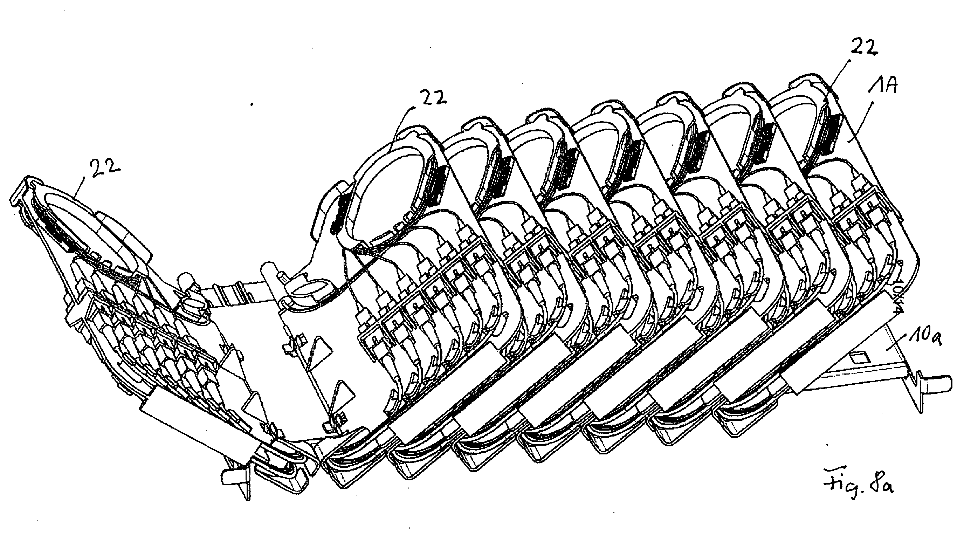

Die Figuren 8 bis 10 zeigen, dass jedes schubladenartige Bauteil, das bei der ersten Ausführungsform als Schale 10 bezeichnet ist, bei der zweiten Ausführungsform im wesentlichen durch eine Grundplatte 10a gebildet ist, auf der bei dieser Ausführungsform acht Patch-Kassetten 1A parallel nebeneinander schwenkbar befestigt sind. Hierdurch enthält jede "Schublade" soviel Patch-Plätze, wie üblicherweise Spleißplätze bei einem Spleiß-Verteilungsrahmen vorgesehen sind.

Bei der Darstellung der Figur 8a sind überlange Abschnitte der Patchkabel auf die Aufnahmeeinrichtungen 22 aufgewickelt, während bei der Darstellung der Figur 8b keine Überlängen vorhanden sind.

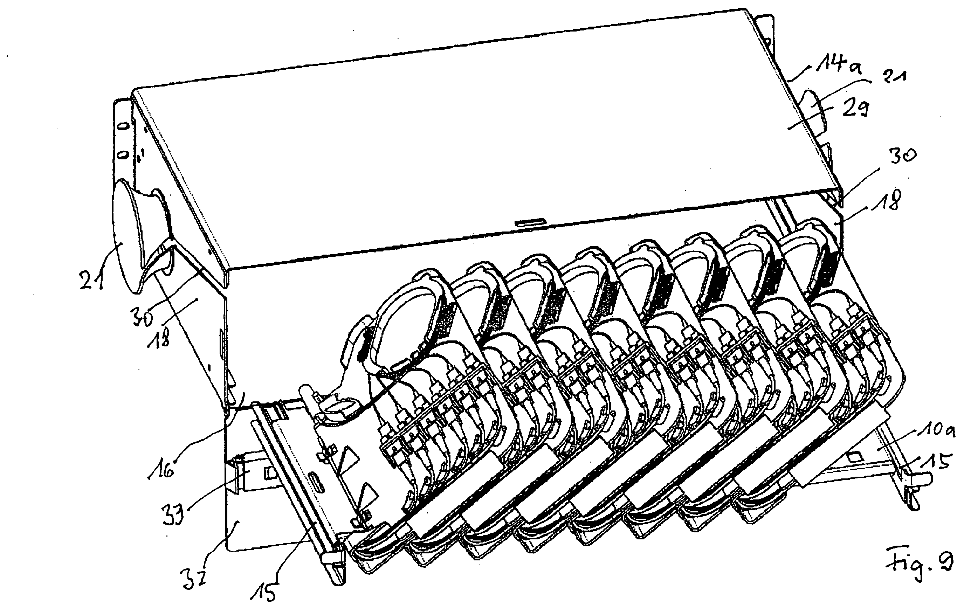

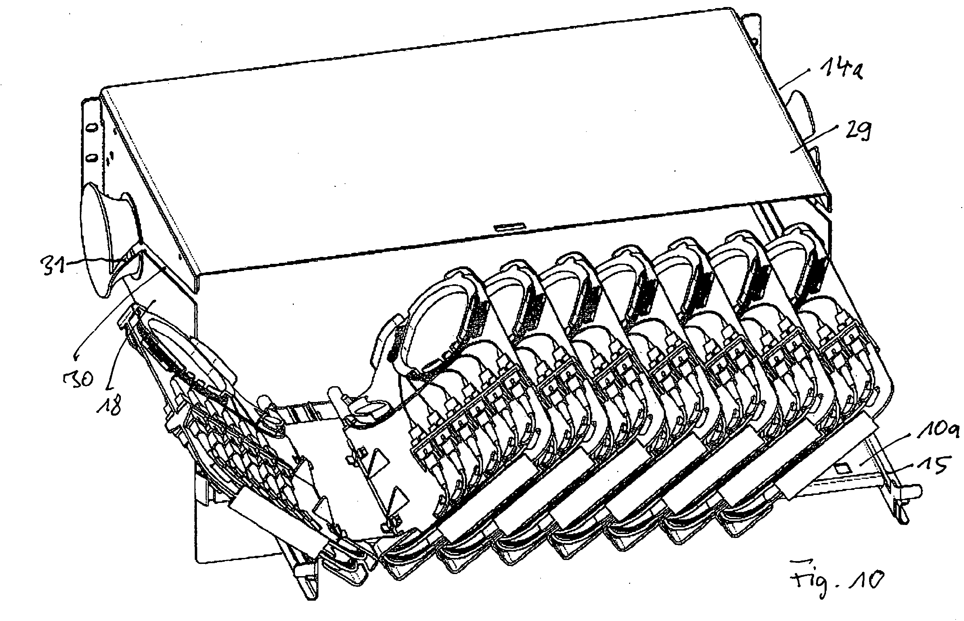

In den Figuren 9 und 10 ist ein Fach 14a mit seiner geschlossenen oberen Wand 29 dargestellt. Die "Schublade" 10a ist wiederum an ihren beiden Endabschnitten an zugehörigen Teleskopgestängen 15 befestigt und aus dem Fach 14a heraus gezogen. Durch die Seitenwände 18 führen vom vorderen Rand ausgehend Schlitze 30 zu trichterförmigen Führungselementen 21 an den Seitenwänden, die ebenfalls mit einem Schlitz 31 versehen sind, so dass die Patchkabel 4 durch die Schlitze 31 und 30 ins Innere des Fachs 14a und von dort zu den zugehörigen Wickeleinrichtungen 22 oder direkt zu den Patchplätzen 2 geführt werden können.

Am vorderen Rand der Bodenwand 16 jedes Fachs 14a ist eine Klappe 32 schwenkbar befestigt, mit der das Fach 14a bei eingeschobener "Schublade" 10a verschließbar ist. Hierzu ist die Klappe 32 mit einem Schnappverschluss 33 versehen.

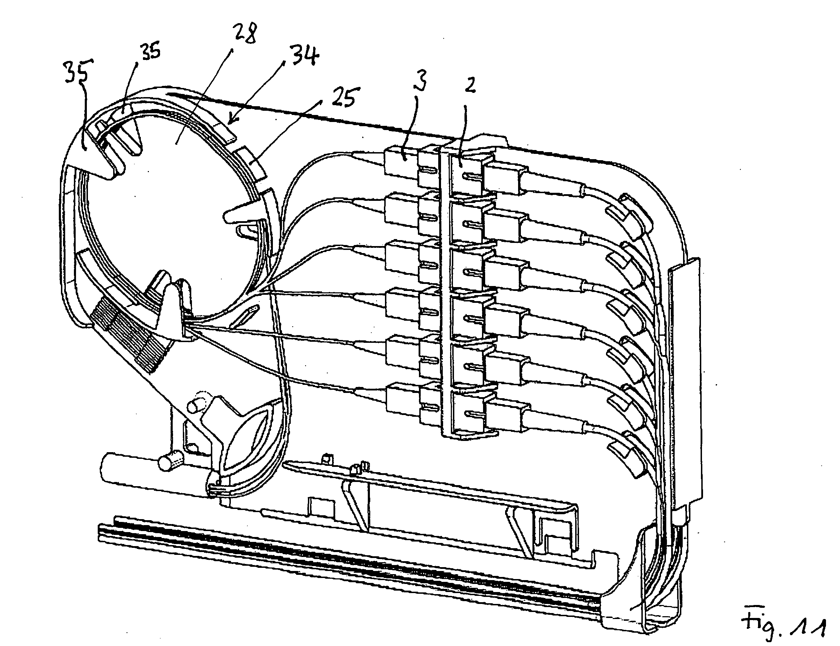

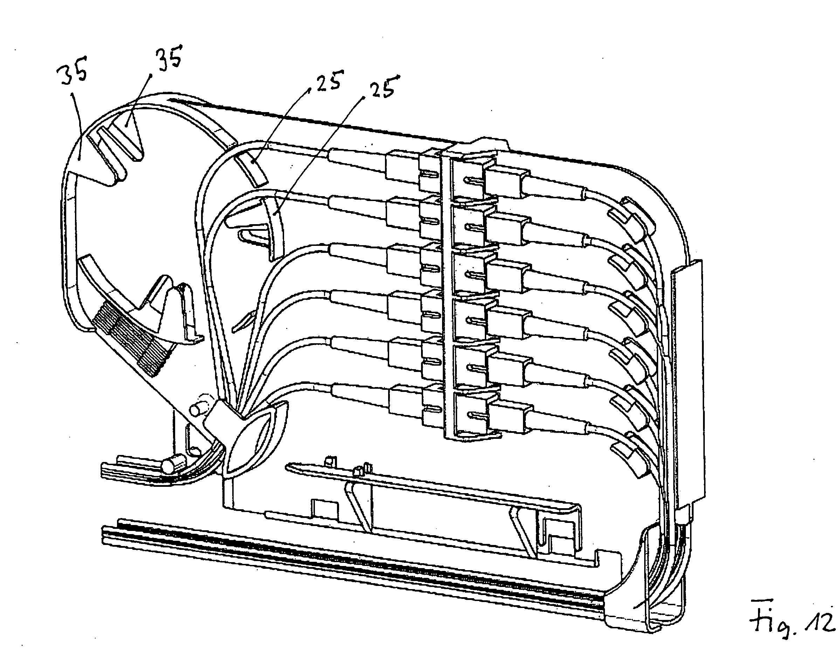

Die Figuren 11 und 12 zeigen eine besonders bevorzugte Variante der zweiten Ausführungsform, bei der die Überlängen der Patchkabel (oder Pig Tails) nicht außen um den Kranz aus Stegen 25 aufgewickelt werden, sondern in den durch die Stege 25 begrenzten Innenraum abgelegt werden. Die Kabelabschnitte liegen dabei gegebenenfalls im gewickelten Zustand an den Innenwänden der Stege 25 an und sind von abgewinkelten Wandabschnitten 35 überdeckt und damit sicher in dem Kranz aus Stegen 25 gehalten. Auch bei dieser Ausführungsform kann in der durch die Stege 25 gebildeten "Tasche" ein Loch bzw. ein ovales Fenster 28 zur Materialersparnis ausgebildet sein. Die Kabel 4 können dann beispielsweise auf den beidseitig angeordneten abgewinkelten Wandabschnitten 35 aufliegen. Es kann auch vorgesehen sein, dass nicht der gesamte Innenraum des Kranzes aus Stegen 25, sondern nur ein kleinerer mittiger Bereich weg geschnitten ist.

Zwischen den Stegen 25 verbleiben auch bei dieser Variante Zwischenräume, durch die die Kabel 4 hindurchführbar sind.

## Patentansprüche

1. Glasfaser-Verteilungsrahmen mit mehreren übereinander angeordneten Fächern, die jeweils mehrere Patch-Kassetten für Patchkabel oder Pig Tails aufweisen, wobei jedes Fach (14, 14a) eine schubladenartig ausziehbare Schale oder Platte (10, 10a) aufweist, in oder auf der die Patch-Kassetten (1, 1A) in einem solchen Abstand zueinander befestigt sind, dass sie zu beiden Seiten hin bis in eine Endlage klappbar sind, in der sie in einem Winkel zum Boden (9) der Schale (10,10a) angeordnet sind,
**dadurch gekennzeichnet,**
**dass** die Patch-Kassetten (1, 1A) an ihren beiden Seiten Kupplungselemente (2) für optische Stecker (3) der Patchkabel (4) oder Pig Tails haben.

2. Glasfaser-Verteilungsrahmen nach Anspruch 1,
**dadurch gekennzeichnet,**
**dass** an jeder Seite der Patch-Kassetten (1, 1A) sechs Kupplungselemente (2) vorhanden sind.

3. Glasfaser-Verteilungsrahmen nach den Ansprüchen 1 bis 2,
**dadurch gekennzeichnet,**
**dass** der unter Rand (22) der Patch-Kassetten (1, 1A) die Schwenkachse bildet.

4. Glasfaser-Verteilungsrahmen nach einem der Ansprüche 1 bis 3,
**dadurch gekennzeichnet,**
**dass** die Patch-Kassetten (1, 1A) an beiden seitlichen Rändern nahe der Schwenkachse (22) einen gemeinsamen Eingang/Ausgang (6) für alle zugehörigen Patchkabel (4) oder Pig Tails haben.

5. Glasfaser-Verteilungsrahmen nach Anspruch 4,
**dadurch gekennzeichnet,**
**dass** an dem Eingang/Ausgang (6) ein Führungselement (7) für die Patchkabel (4) oder Pig Tails angebracht ist.

6. Glasfaser-Verteilungsrahmen nach den Ansprüchen 1 bis 5
**dadurch gekennzeichnet,**
**dass** jede Schale oder Platte (10, 10a) über ein Teleskopgestänge (15) mit ihrem Fach (14, 14a) verbunden ist.

7. Glasfaser-Verteilungsrahmen nach den Ansprüchen 1 bis 6,
**dadurch gekennzeichnet,**
**dass** jedes Fach (14, 14a) einen fixen Deckel und in den Seitenwänden (18) jeweils eine schlitzförmige Aussparung aufweist, die in eine mit einem Führungselement (21) versehene Wandöffnung (20) zum Eintritt/Austritt der Patchkabel (4) oder Pig Tails einmündet.

8. Glasfaser-Verteilungsrahmen nach den Ansprüchen 1 bis 7,
**dadurch gekennzeichnet,**
**dass** an dem vorderen Rand (23) der Schale (10) eine schwenkbare Klappe befestigt ist, die die Vorderseite des Fachs (14) freigeben oder verschließen kann.

9. Glasfaser-Verteilungsrahmen nach den Ansprüchen 1 bis 8,
**dadurch gekennzeichnet,**
**dass** die Patch-Kassetten (1A) jeweils wenigstens eine seitliche Verlängerung (24) mit einer Aufnahmeeinrichtung (22) für einen überlangen Teil (23) von Patchkabeln (4) oder Pig Tails aufweisen.

10. Glasfaser-Verteilungsrahmen nach Anspruch 9,
**dadurch gekennzeichnet,**
**dass** die Aufnahmeeinrichtung (22) einen beidseitig vorstehenden runden, vorzugsweise ovalen Kranz aus Stegen (25) aufweist, um den der überlange Teil der Patch-Kabel (4) oder Pig Tails wickelbar ist.

11. Glasfaser-Verteilungsrahmen nach Anspruch 9,
**dadurch gekennzeichnet,**
**dass** die Aufnahmeeinrichtung (22) einen beidseitig vorstehenden runden, vorzugsweise ovalen Kranz aus Stegen (25) aufweist, in dessen Innenraum der überlange Teil der Kabel ablegbar ist.

12. Glasfaser-Verteilungsrahmen nach den Ansprüchen 9 bis 11,
**dadurch gekennzeichnet,**
**dass** die Patch-Kassette (1A) in der seitlichen Verlängerung ein kreisrundes oder ovales Loche aufweist, das zu beiden Seiten der Patch-Kassetten von den abstehenden Stegen (25) umschlossen ist.

13. Glasfaser-Verteilungsrahmen nach den Ansprüchen 9 bis 12,
**dadurch gekennzeichnet,**
**dass** jede ausziehbare Schale bzw. Platte (10a) acht Patch-Kassetten (1A) aufweist.

## Claims

1. Optical fibre distribution frame with a plurality of compartments disposed one above each other and each including a plurality of patch cassettes for patch cables or pig tails, wherein each compartment (14, 14a) has a tray or plate (10, 10a) which can be pulled out like a drawer, in or on which the patch cassettes (1, 1A) are fastened and spaced apart from one another in a such a way that they can be pivoted to both sides into an end position in which they are disposed a an angle to the base (9) of the tray (10,10a), **characterised in that** the patch cassettes (1, 1A) have on both sides coupling elements (2) for optical connectors (3) for the patch cables (4) or pig tails.

2. Optical fibre distribution frame according to claim 1, **characterised in that** six coupling elements (2) are provided on each side of the patch cassettes (1, 1A).

3. Optical fibre distribution frame according to claims 1 to 2, **characterised in that** the lower edge (22) of the patch cassettes (1, 1A) forms the pivot axis.

4. Optical fibre distribution frame according to one of claims 1 to 3, **characterised in that** the patch cassettes (1, 1A) have a common input/output (6) for all associated patch cables (4) or pig tails on both lateral edges close to the pivot axis (22).

5. Optical fibre distribution frame according to claim 4, **characterised in that** a guide element (7) for the patch cables (4) or pig tails is attached to the input/output (6).

6. Optical fibre distribution frame according to claims 1 to 5, **characterised in that** each tray or plate (10, 10a) is connected to its compartment (14, 14a) by means of a telescopic rod (15).

7. Optical fibre distribution frame according to claims 1 to 6, **characterised in that** each compartment (14, 14a) has a fixed top and has in each of the side walls (18) a slit-like cutaway area which opens into a wall opening (20) provided with a guide element (21) for entry/exit of the patch cables (4) or pig tails.

8. Optical fibre distribution frame according to claims 1 to 7, **characterised in that** a pivotable flap which can free or close the front side (23) of the compartment (14) is fastened to the front edge (23) of the tray (10).

9. Optical fibre distribution frame according to claims 1 to 8, **characterised in that** the patch cassettes (1A) in each case have at least one lateral extension (24) with a receiving arrangement (22) for an excessively long part (23) of patch cables (4) or pig tails.

10. Optical fibre distribution frame according to claim 9, **characterised in that** the receiving arrangement (22) has a round, preferably oval ring of tabs (25) projecting on both sides, around which the excessively long part of the patch cables (4) or pig tails can be wound.

11. Optical fibre distribution frame according to claim 9, **characterised in that** the receiving arrangement (22) has a round, preferably oval ring of tabs (25) projecting on both sides, into the interior of which the excessively long part of the cables can be placed.

12. Optical fibre distribution frame according to claims 9 to 11, **characterised in that** the patch cassette (1A) has in the lateral extension a circular or oval hole which is surrounded on both sides of the patch cassettes by the projecting tabs (25).

13. Optical fibre distribution frame according to claims 9 to 12, **characterised in that** each tray or panel (10a) which can be pulled out has eight patch cassettes (1A).

## Revendications

1. Cadre de distribution en fibres de verre comprenant plusieurs compartiments disposés les uns au-dessus des autres, qui présentent respectivement plusieurs cassettes Patch pour des câbles Patch ou des paires torsadées, dans lequel chaque compartiment (14, 14a) présente une coque ou une plaque (10, 10a) pouvant être déployée à la manière d'un tiroir, dans laquelle ou sur laquelle les cassettes Patch (1, 1A) sont fixées les unes par rapport aux autres à une distance telle qu'elles peuvent être rabattues en direction des deux côtés jusque dans une position finale, dans laquelle elles sont disposées selon un angle donné par rapport au fond (9) de la coque (10, 10a),
**caractérisé en ce**
**que** les cassettes Patch (1, 1A) ont, au niveau de leurs deux côtés, des éléments de couplage (2) pour des connecteurs (3) optiques des câbles Patch (4) ou des paires torsadées.

2. Cadre de distribution en fibres de verre selon la revendication 1,
**caractérisé en ce**
**que** sont présents, au niveau de chaque côté des cassettes Patch (1, 1A), six éléments de couplage (2).

3. Cadre de distribution en fibres de verre selon les revendications 1 à 2,
**caractérisé en ce**
**que** le bord (22) inférieur des cassettes Patch (1, 1A) forme l'axe de pivotement.

4. Cadre de distribution en fibres de verre selon l'une quelconque des revendications 1 à 3,
**caractérisé en ce**
**que** les cassettes Patch (1, 1A) ont, au niveau des deux bords latéraux, à proximité de l'axe de pivotement (22), une entrée/sortie (6) commune pour tous les câbles Patch (4) ou paires torsadées associés.

5. Cadre de distribution en fibres de verre selon la revendication 4,
**caractérisé en ce**
**qu'**un élément de guidage (7) pour les câbles Patch (4) ou les paires torsadées est installé au niveau de l'entrée/la sortie (6).

6. Cadre de distribution en fibres de verre selon les revendications 1 à 5,
**caractérisé en ce**
**que** chaque coque ou plaque (10, 10a) est reliée à son compartiment (14, 14a) par l'intermédiaire d'une tringle télescopique (15).

7. Cadre de distribution en fibres de verre selon les revendications 1 à 6,
**caractérisé en ce**
**que** chaque compartiment (14, 14a) présente un couvercle fixe et, dans les parois latérales (18), respectivement un évidement en forme de fente, qui débouche dans une ouverture murale (20) pourvue d'un élément de guidage (21) servant à faire entrer/sortir des câbles Patch (4) ou des paires torsadées.

8. Cadre de distribution en fibres de verre selon les revendications 1 à 7,
**caractérisé en ce**
**qu'**est fixé, au niveau du bord avant (23) de la coque (10), un clapet pouvant pivoter, qui peut dégager ou fermer le côté avant du compartiment (14).

9. Cadre de distribution en fibres de verre selon les revendications 1 à 8,
**caractérisé en ce**
**que** les cassettes Patch (1A) présentent respectivement au moins un prolongement (24) latéral pourvu d'un dispositif de réception (22) pour une partie (23) rallongée de câbles Patch (4) ou de paires torsadées.

10. Cadre de distribution en fibres de verre selon la revendication 9,
**caractérisé en ce**
**que** le dispositif de réception (22) présente une couronne ronde, de préférence ovale, faisant saillie des deux côtés, composée d'entretoises (25), autour de laquelle la partie rallongée des câbles Patch (4) ou des paires torsadées peut être enroulée.

11. Cadre de distribution en fibres de verre selon la revendication 9,
**caractérisé en ce**
**que** le dispositif de réception (22) présente une couronne ronde, de préférence ovale, faisant saillie des deux côtés, composée d'entretoises (25), dans l'espace intérieur de laquelle la partie rallongée des câbles peut être placée.

12. Cadre de distribution en fibres de verre selon les revendications 9 à 11,
**caractérisé en ce**
**que** la cassette Patch (1A) présente, dans le prolongement latéral, un trou rond circulaire ou ovale, qui est entouré des deux côtés des cassettes Patch par des entretoises (25) dépassant.

13. Cadre de distribution en fibres de verre selon les revendications 9 à 12,
**caractérisé en ce**
**que** chaque coque ou plaque (10a) pouvant être déployée présente huit cassettes Patch (1A).
